**Europäisches Patentamt**

(19) **European Patent Office**

**Office européen des brevets**

(11) Publication number: **0 116 225**
**B1**

(12) **EUROPEAN PATENT SPECIFICATION**

(45) Date of publication of patent specification: **03.05.89**

(21) Application number: **83307778.7**

(22) Date of filing: **20.12.83**

(51) Int. Cl.⁴: **C 09 D 3/58, C 08 G 59/42**

(54) **Aqueous coating compositions and methods for preparing same.**

(30) Priority: **30.12.82 US 454818**
**30.12.82 US 454771**
**30.12.82 US 454817**

(43) Date of publication of application:
**22.08.84 Bulletin 84/34**

(45) Publication of the grant of the patent:
**03.05.89 Bulletin 89/18**

(84) Designated Contracting States:
**AT BE DE FR GB IT NL SE**

(56) References cited:
**EP-A-0 006 334**
**DE-A-3 006 175**
**NL-A- 122 566**

(73) Proprietor: **THE VALSPAR CORPORATION**
**1101 East Third Street, South**
**Minneapolis Minnesota 55415 (US)**

(72) Inventor: **Chu, Shaw Chang**
**68 Riverview Terrace**
**Belle Mead New Jersey 08502 (US)**
Inventor: **Spencer, Arthur Theodore**
**43 Woodlane Road**
**Lawrenceville New Jersey 08648 (US)**
Inventor: **McCarty, William Henry**
**R.D. No. 3, Box 443C**
**Whitehouse Station New Jersey 08889 (US)**

(74) Representative: **Jones, Alan John et al**
**CARPMAELS & RANSFORD 43 Bloomsbury**
**Square**
**London, WC1A 2RA (GB)**

Courier Press, Leamington Spa, England.

**Description**

This invention relates to aqueous coating compositions and methods for preparing same.

A variety of aqueous coating compositions comprising epoxy resins and acrylic polymers are known in the art and several are commercially available. In order to obtain desirable characteristics for many critical end use applications, such as coatings for sanitary cans, it is considered necessary to include a high proportion of epoxy resin in the composition. Epoxy contents of 60 to 80 percent are commonly used. Typical epoxy acrylate compositions are disclosed in U.S. Patent Nos. 4,247,439, 4,212,781, 4,308,185 and 4,302,373.

U.S. Patent No. 4,285,847 discloses epoxy acrylic compositions in which the epoxy acrylic is made by free-radical grafting of ionizable side chains onto an epoxy backbone; dispersing this product in water and thereafter polymerizing, in situ, addition polymerizable monomers which may or may not also contain ionizable groups. By this means the solids content of the composition is increased and the proportion of total epoxy resin in the composition is reduced by replacement with the cheaper addition polymer thereby reducing the cost of the composition.

In accordance with the present invention cost reduction as well as several other advantages over U.S. Patent 4,285,847 are obtained. By using an epoxy acrylate prepared by an esterification reaction between an epoxy resin and an acrylic polymer instead of the graft epoxy-acrylic of U.S. Patent 4,285,847, benefits are obtained in the latitude of solids and viscosity which can be conveniently obtained, and in the ability to reduce the amount of amine neutralizing agent necessary to obtain stable water dispersions having useful viscosity.

EP—A—0,006,334 discloses a process for the preparation of a self-emulsifiable epoxy ester copolymer mixture useful in the production of aqueous emulsion coating compositions. The process comprises esterifying a solvent-soluble carboxyl-functional polymer with an epoxy resin which is a mixture comprising aromatic polyethers containing oxirane functionality, at least 5% of the aromatic polyethers being constituted by diepoxide, the mixture of aromatic polyethers constituting at least 40% of the total resin solids content and providing oxirane functionality in a stoichiometric deficiency with respect to carboxyl functionality in the carboxyl-functional polymer of from 1:2 to 1:20. The esterification is carried out in an organic solvent in the presence of greater than 2% of an amine esterification catalyst (e.g. dimethyl ethanolamine), based on the weight of the reactants subjected to esterification, and at an elevated temperature sufficient to cause the oxirane functionality to react with the carboxyl functionality until the oxirane functionality is substantially entirely consumed. At least a portion of the carboxyl functionality in the resultant polymer-epoxy resin hydroxy ester reaction product is reacted with a base (e.g. dimethylamine ethanol) to render the said reaction product self-emulsifiable in water.

The present invention resides in one aspect in an aqueous coating composition comprising

A. an ionic polymer component containing sufficient carboxyl groups to render it self dispersible in water in neutralized form which is the reaction product of an epoxy resin containing 1,2-epoxy groups, and a preformed addition polymer containing carboxyl groups, said ionic polymer containing hydroxy ester groups from the reaction of 1,2-epoxy groups on said epoxy resin with carboxyl groups on said addition polymer, and being substantially free of unreacted 1,2-epoxy groups;

B. an addition polymer different from said addition polymer defined in (A) and:

C. ammonia or an organic amine neutralizing agent in an amount sufficient to render the composition stably dispersible in water.

In a further aspect, the invention resides in a method for preparing a coating composition comprising the steps of

A. preparing an ionic polymer component containing sufficient carboxyl groups to render it self-dispersible in water in neutralized form by reacting an epoxy resin containing 1,2-epoxy groups, and a preformed addition polymer containing carboxyl groups, said ionic polymer containing hydroxy ester groups from the reaction of 1,2-epoxy groups on said epoxy resin with carboxyl groups on said preformed addition polymer, and being substantially free of unreacted 1,2-epoxy groups;

B. dispersing said ionic polymer component in water with the addition of ammonia or an organic amine neutralizing agent in an amount sufficient to render the composition stably dispersible in water; and

C. incorporating an addition polymer different from said addition polymer defined in (A) into the aqueous dispersion of said ionic polymer component.

Conveniently, said incorporating step is effected by mixing the different addition polymer with the preformed addition polymer prior to reaction with the epoxy resin or by mixing the different addition polymer with the ionic polymer component before, during or after dispersal thereof in water. Alternatively, the different addition polymer can be prepared *in situ* in the presence of the ionic polymer dispersion in which case the ionic polymer acts as a polymeric surfactant.

Accordingly, in yet a further aspect, the invention provides a method for preparing a coating composition comprising the steps of

A. preparing an ionic polymer component containing sufficient carboxyl groups to render it self-dispersible in water in neutralized form, by reacting an epoxy resin containing 1,2-epoxy groups with a preformed addition polymer containing carboxyl groups, said ionic polymer containing hydroxy ester groups from the esterification reaction of 1,2-epoxy groups on the epoxy resin with carboxyl groups on the preformed addition polymer and being substantially free of unreacted 1,2-epoxy groups;

B. dispersing the ionic polymer component in water with the addition of ammonia or an organic amine neutralizing agent in an amount sufficient to render the composition stably dispersible in water; and

C. incorporating unsaturated monomers in the resulting dispersion and polymerizing said monomers *in situ* to provide an addition polymer different from the carboxyl-containing addition polymer.

The ionic polymer component A of said coating composition may be prepared by reaction of a preformed addition polymer containing carboxyl groups with an epoxy resin containing 1,2-epoxy groups. Alternatively, component A may be prepared by polymerization of a carboxyl containing monomer in the presence of an epoxy resin containing 1,2-epoxy groups to give a mixture of the epoxy resin and a carboxyl containing copolymer. This latter reaction is a conventional addition polymerization reaction utilizing catalysts and procedures which are well known. For example, the methods disclosed in U.S. Patent 4,212,781 are suitable in which case the resulting mixture presumably also contains carboxyl polymer grafted to aliphatic carbon atoms on the epoxy backbone. However, grafting while acceptable herein is not necessary. Accordingly, polymerization conditions less stringent than desired in said patent can be used to obtain a copolymer without any epoxy graft product.

Once the carboxyl containing copolymer is formed the methods disclosed in U.S. Patent 4,247,439 or U.S. Patent 4,302,373 can be used to conduct the reaction between the epoxy resin and the carboxyl containing copolymer. It may, however, be necessary to modify conditions to promote esterification instead of quaternization, for example by using tertiary amine in an amount which is less than sufficient to react with all of the epoxy groups on the epoxy resin.

Briefly, the reaction between the epoxy resin and the preformed addition polymer containing carboxyl groups is conducted in the presence of a tertiary amine, with the conditions being chosen so that an esterification reaction occurs between the epoxy groups of the epoxy resin and the carboxyl groups of the addition polymer. By way of contrast, the reaction conditions in the aforementioned patents are selected in order to promote a reaction between the tertiary amine and epoxy groups giving quaternary ammonium groups in accordance with a well known reaction. It is believed that the reaction which is intended to promote esterification also results in the formation of significant amounts of quaternary ammonium groups by reaction between the epoxy groups and the tertiary amine. Indeed, more of the epoxy groups may be converted to quaternary ammonium groups than are converted to hydroxy ester linkages. Also, the reaction described in said patents intended to produce quaternary ammonium groups can, under appropriate conditions, result in significant ester formation. The products prepared in accordance with the present process therefore can contain significant, even predominant amounts of quaternary groups, providing that hydroxy ester groups obtained by the reaction of epoxy groups with carboxyl groups are also present. At a minimum at least 5 percent of the epoxy groups on the epoxy resin should be converted to hydroxy ester groups. Whatever the relative proportions of quaternary and hydroxy ester groups, the polymer component A is ionic in character and is substantially free of unreacted 1,2-epoxy groups.

The ionic polymer may contain carboxyl polymer grafted to carbon atoms on the epoxy resin backbone but it is preferred that the polymer is prepared under conditions where grafting is avoided.

In general, the epoxy resin constitutes at least about 40 percent of the ionic polymer and the carboxyl containing polymer comprises the balance. Preferably the epoxy content is at least 60 percent and most preferably about 75 percent.

A wide variety of epoxy resins may be used herein but the preferred epoxy resins are aromatic polyethers, particularly those derived from the condensation of a bisphenol such as Bisphenol A, and epichlorohydrin. These epoxy resins possess hydroxy groups in addition to epoxy groups. The higher the molecular weight of the epoxy resin the more hydroxy groups are present. These hydroxy groups can participate in the final curing reaction. The preferred epoxy resins are aromatic polyethers having a number average molecular weight $(M_n)$ of at least 1,500. However, the number average molecular weight of these resins can vary from 350 to 6000.

As recognized in the art, epoxy resins prepared by the condensation of bisphenols and epichlorohydrin contain a mixture of diepoxides, monoepoxides and aromatic polyethers which are free of epoxy groups. The average functionality of such mixtures may range widely from 0.2 epoxy groups per molecule to nearly 2 epoxy groups per molecule. Suitable mixtures of epoxy resins can be obtained by reacting a lower molecular weight epoxy resin having a functionality of between 1 and 2, for example, with a defunctionalizing agent which is capable of reacting with the epoxy groups. The defunctionalizing agent can contain carboxyl groups, hydroxy groups or amide groups. Specific suitable materials include acids such as benzoic acid and fatty acids such as octanoic acid; hydroxy compounds such as phenols, in particular bisphenols and lower alkanols; and amides such as acrylamide. Defunctionalization with bisphenols is of particular interest since the epoxy resin is thereby upgraded to higher molecular weight at the same time as some of the epoxy groups are defunctionalized.

The carboxyl polymer is prepared by the addition polymerization of ethylenically unsaturated monomers comprising at least about 20 percent of an ethylenically unsaturated carboxylic acid based on the total weight of the monomers. Polymers and copolymers of this type are well known although the copolymers with particularly high proportions of carboxylic acid as preferred herein are somewhat unusual. Preferably the carboxyl containing polymer is a copolymer with ethylenically unsaturated monomers which are non-reactive under the contemplated conditions of polymerization and reaction with epoxy resin. However, small amounts of reactive monomers, e.g., hydroxy monomers such as 2-hydroxy ethylmethacrylate, amide monomers such as acrylamide, and N-methylol monomers such as N-methylol acrylamide, can be used. Suitable non-reactive monomers are, for example, acrylate and methacrylate esters such as ethyl acrylate, methyl acrylate, butyl acrylate, styrene or vinyl toluene, vinyl acetate, vinyl chloride, vinylidine chloride, and acrylonitrile. The function of these monomers is to enhance solvent solubility and to provide good film formation. Otherwise the nature and proportions are not critical.

The presence of a large proportion of carboxyl functional monomer is important. The preferred minimum proportion of carboxyl monomer is 30 percent of the weight of the monomers used to prepare the carboxyl containing polymer. Methacrylic acid provides the best hydrolytic stability and is very much preferred, but other acids such as fumaric acid, acrylic acid, crotonic acid and itaconic acid are useful. Up to about 80 percent of the monomers can be carboxyl functional, the maximum being determined by retention of solvent solubility of the copolymer.

The preferred polymers containing carboxyl groups generally having a number average molecular weight ($M_n$) in the range of 3000 to 20,000, preferably 3,000 to 6,000. Molecular weight can be controlled by monomer content during polymerization, catalyst concentration and polymerization temperature in known manner. Mercaptan chain termination is preferably avoided especially where the product is intended for use in coating of sanitary cans because of the offensive odor of mercaptans.

Generally, the addition polymer containing carboxyl groups is preformed and is reacted with the epoxy resin as a solvent solution in the presence of sufficient amine, preferably tertiary amine to promote the reaction. However, the addition copolymer can also be prepared by reacting a carboxyl containing monomer such as methacrylic acid with the epoxy group in the presence of tertiary amine and subsequently polymerizing additional monomers, in situ. The reaction between the oxirane groups of the epoxy resin and the carboxyl groups of the addition polymer is carried out in the presence of an esterification catalyst.

The preferred esterification catalysts are tertiary amines particularly, dimethylaminoethanol but other esterification catalysts particularly tertiary amines such as dimethylbenzylamine, trimethylamine, and tributylamine can be used. The amount of catalyst used can vary widely. For example, where a tertiary amine is used as little as 0.1—0.3 percent by weight of the catalyst based on the total amount of epoxy resin and carboxyl containing polymer can be used or the amount can be much larger up to about 10 percent and more of the reactants.

Another way of defining the amount of the amine used is the relation to the total carboxyl content of the acid polymer. The amount of amine present during the reaction of the epoxy resin and carboxyl polymer should be sufficient to neutralize from 5 to 50 percent of the carboxyl groups in the acid polymer. Preferably, the amine is sufficient to neutralize between 10 and 35 percent of the carboxyl groups. Still another way of defining the amount of tertiary amine present during reaction of the epoxy resin and carboxyl polymer is by the equivalent ratio of amine to 1,2-epoxy groups. Preferably, this ratio is less than one thereby ensuring that some of the epoxy groups will be consumed in hydroxy ester formation by reaction with carboxyl groups.

The amount of amine has a significant effect on the nature of the product of the reaction. In general, the smaller the amount of amine present during reaction the higher the viscosity of the product. This difference in viscosity is apparent in both the solvent solution and when the product is emulsified in water. The effect of the amount of amine used is observed even where the total amount of amine present in the dispersed product is identical. Thus, for example, the same product is not obtained when amine is present at the 40 percent neutralization level during reaction as when amine sufficient to neutralize 5 percent of the carboxyl groups is present during reaction and supplemented with 35 percent of the neutralization amount prior to dispersion in water.

The amount of amine present during reaction also has a pronounced effect on the particle size of the final dispersion. The relationship of amine content to particle size is illustrated in the following examples.

The second polymer different from the addition polymer used to prepare the ionic epoxy resin-acid polymer product can be prepared from a wide variety of unsaturated monomers. Particularly preferred are monomers which are free of functional groups reactive with epoxy resin or which would render the polymer self-dispersible in water. For example there may be mentioned the esters of acrylic and methacrylic acid such as methyl acrylate, butyl acrylate, methyl methacrylate and butyl methacrylate; aromatic monomers such as styrene and methylstyrene; vinyl and vinylidene halides such as vinyl chloride and vinylidene chloride; isoprene; butadiene, and acrylonitrile. In certain applications it may be advantageous to include in the copolymer self-crosslinking monomers such as N-methylol acrylamide or N-isobutoxy acrylamide. Presently preferred monomers include styrene, methylstyrene and butyl acrylate and acrylonitrile.

The second polymer can be introduced at any convenient stage of the reaction. Preferably, the second polymer is prepared, in situ, in the presence of an aqueous dispersion of the ionic epoxy-acidic polymer reaction product. The reaction is conducted in known manner and advantageously is initiated by a redox system. Inorganic or organic peroxides such as hydrogen peroxide or t-butyl hydroperoxide; or persulfates such as ammonium persulfate and alkali metal persulfates can be coupled with a suitable reducing agent such as hydrazine, ammonium or alkali metal sulfites, bisulfites, metabisulfites or hydrosulfites. The procedures disclosed in U.S. Patent 4,285,847 are suitable for conducting the polymerization.

The second polymer can also be introduced as a preformed polymer into either the aqueous dispersion of the ionic epoxy-acid polymer product or can be mixed with the ionic epoxy resin-acid polymer product before it is dispersed in water. Similarly, the second polymer can be mixed with a solvent solution of the acidic polymer prior to its reaction with the epoxy resin either by making the addition polymers separately or by preparing one in the presence of the other. The proportion of the second polymer in the composition can vary widely. The maximum is limited by the amount which can be stably dispersed in water by the ionic polymer component and the retention of desired film properties. Usually the weight ratio of the second addition polymer (B) to the ionic polymer (A) is from 0.05:1 to 10:1 but more preferably is 0.2:1 to 5:1.

The resins used in preparing the compositions of this invention are used by dissolution in a volatile organic solvent. A wide variety of solvents are suitable. Organic solvents of limited water miscibility, such as xylene, toluene, butanol and 2-butoxyethanol are useful, and they may be used alone or together with water miscible solvents, such as 2-ethoxyethanol or methyl ethyl ketone.

The final composition includes sufficient ammonia or amine to render the mixture self-dispersible in water. Preferably, a tertiary amine such as dimethylethanolamine is used. In general, the total amount of an amine or an ammonia present in the final product will be sufficient to neutralize at least 25 to 90 percent of the carboxyl groups present in the polymers used to prepare their composition. Finally, compositions, as used, preferably include a curing agent such as an aminoplast or a phenoplast resin in an amount of 1 to 25 percent, preferably from 3 to 10 percent, based on the solids of the composition.

In some cases it may be found that the process described above yields an aqueous coating composition containing an undesirable residue of the monomer used to produce the second polymer. For example, the use of styrene and butyl acrylate in the preparation of the second polymer may result in a product having an objectionable odor due to residual butyl acrylate which polymerizes more slowly than styrene. In such a case, the undesired monomer residue can be reduced by conducting an additional polymerization step in the presence of the second polymer containing residual monomer, with another monomer which is capable of copolymerizing with the undesired monomer and which results in a less undesirable monomer residue or a residue which is more easily removable. For example, where the monomer residue is butyl acrylate an additional polymerization step using further styrene as the comonomer can be effected on the second polymer at any convenient stage during preparation of the coating composition.

This invention is illustrated by the following examples.

Example 1

A polymer surfactant dispersion is prepared by reacting an acid containing acrylic prepolymer with an epoxy resin, neutralizing with base and dispersing in water.

The acrylic prepolymer is prepared as follows:

|  | Parts by weight |
| --- | --- |
| Butanol | 2755.2 |
| Methacrylic Acid | 1197.7 |
| Styrene | 597.8 |
| Ethyl Acrylate | 197.5 |
| Benzoyl Peroxide (70%, Water Wet) | 142.8 |
| 2-Butoxyethanol | 1995.8 |
|  | 6886.8 |

The butanol is charged to a 12-liter reactor equipped with a stirrer, reflux condenser, thermometer, addition funnel and nitrogen inlet. A premix is made of the monomers and benzoyl peroxide and 20 percent is added to the reactor. The nitrogen flow is started and the reactor is heated to 93°C and held at this temperature for 15 minutes. The remaining premix is added uniformly over 5 hours while maintaining 93°C. After the premix is added, the temperature is held for two hours to complete the polymerization. The 2-butoxyethanol is then added to dilute the prepolymer. The resulting solution has a solids content of 30.3 percent, an acid number of 385 and a viscosity of 2600 centipoise (2.6 Pa · s)

An epoxy acrylate adduct is formed by esterifying an epoxy resin with the above acrylic prepolymer under amine catalysis as follows:

# EP 0 116 225 B1

|  | Parts by weight |
|---|---|
| DER 331[1] | 698.1 |
| Bisphenol A | 374.9 |
| 2-Butoxyethanol | 116.8 |
| Tri-n-butylamine | 2.2 |
| Acrylic Prepolymer | 1299.0 |
| Dimethylaminoethanol (first portion) | 28.6 |
| Dimethylaminoethanol (second portion) | 40.4 |
| Cymel 1156[2] | 107.7 |
| Deionized Water | 2331.5 |
|  | 4999.2 |

[1] DER-331 (Dow Chemical Co.)—A 182—190 epoxy equivalent weight diglycidyl ether of bisphenol A.
[2] Cymel 1156 (American Cyanamid Co.)—A butylated melamine curing agent.

The first four items above are charged to a 5-liter reactor with stirrer, reflux condenser, thermometer and nitrogen inlet. Nitrogen flow is started and the reactants are heated to 130°C. After exotherm, 150°C is maintained until the oxirane content of the reaction mixture falls to 0.37 meq/g. The acrylic prepolymer is then added. The mixture is stirred until uniform and the temperature is adjusted to 94°C. The first portion of dimethylaminoethanol (esterification catalyst) is then added and this temperature is held for 3 hours. The reaction mixture turns from opaque to translucent and the acid number drops by the amount indicating complete reaction of the epoxy. The epoxy acrylate resin solution has a solids content of 57.3, an acid number of 85.0 and a specific viscosity of 0.33. There is no residual oxirane content.

To form a dispersion, the epoxy acrylate adduct is further neutralized with the second portion of dimethylaminoethanol and the curing agent is added. Water is added with efficient stirring to produce a stable, small particle size dispersion with a solids content of 31.5 percent.

Example 2

The above polymeric surfactant dispersion (2,000 parts) is transferred to a 5 liter reactor together with 500 parts of deionized water and 30 parts of dimethylaminoethanol. A nitrogen blanket is applied and the reactor is heated to 80°C. A mixture of 303 parts of styrene and 17 parts of benzoyl peroxide (70%, water wet) is added with stirring over 3 hrs. at 80°C. Then, t-Butyl hydroperoxide (0.5 part) is added. After a 5-minute wait, 0.5 parts of sodium bisulfite in 15 parts water is added over 15 minutes. The emulsion is held at 80°C for 1/2 hour. Water (800 parts) is added and the emulsion is cooled. The product has a solids content of 24.1 percent acid number of 62, specific viscosity of 0.76 and dispersion viscosity of 125 cp (0.125 Pa · s).

The above emulsion was drawn down on aluminum and tinplate substrates and baked for 2 minutes at 400°F (204.5°C). Properties of gloss, adhesion, wedgebend flexibility and pasteurization resistance were all rated excellent at beer and soft drink weights.

Example 3

The polymeric surfactant of Example 1 (2000 parts) is charged to a 5 liter reactor together with 500 parts of deionized water and 5 parts of sodium bisulfite. The mixture is heated to 65°C under a nitrogen blanket. A premix of 225 parts of styrene, 75 parts of acrylonitrile and 5 parts of t-butyl hydroperoxide (70%) is added over 1 hour at 65° and the mixture then held for an additional 1/2 hour. An additional 0.5 parts of t-butyl hydroperoxide (70%) is added. After 5 minutes a mixture of 0.5 parts sodium bisulfite in 15 parts water is added. Temperature (65°C) is held for an additional 1/2 hour, then a mixture of 800 parts water and 15 parts dimethylaminoethanol are added. The resulting coating emulsion has a solids content of 24.8 percent, an acid number of 59.5 and viscosity of 85 centipoise (0.085 Pa · s).

Test results on aluminum and tinplate panels, as in Example 2, all produced excellent results.

Example 4

An epoxy acrylate polymeric surfactant dispersion is formed by reacting an epoxy resin with the acrylic prepolymer of Example 1 under tertiary amine esterification catalysis as follows:

|  | Parts by weight |
|---|---|
| Epon 828[1] | 1445.0 |
| Bisphenol A | 780.2 |
| 2-Butoxyethanol | 245.0 |
| Tri-n-butylamine | 4.6 |
| Acrylic prepolymer of Example 1 | 2674.0 |
| Deionized Water | 138.9 |
| Dimethylaminoethanol | 89.0 |
| Dimethylaminoethanol | 79.1 |
| Cymel 1156 | 150.2 |
| Deionized Water | 4944.2 |
|  | 10550.2 |

[1] Epon 828 (Shell Chemical Co.)—An 182—190 epoxy equivalent weight diglycidyl ether of bisphenol A.

The procedure of the epoxy acrylate preparation and dispersion of Example 1 are followed with the exception that a minor amount of water is added with the acrylic prepolymer to help control reaction viscosity and temperature. The resulting polymer has an acid number of 85.7. The dispersion product has a solids content of 29.2%, a pH of 6.8, viscosity of 12,600 centipoise (12.6 Pa · s) and particle size 0.17 microns (µm).

The above polymeric surfactant dispersion (4500 parts) is charged to a 12 l reactor together with 4320 parts of deionized water, 27 parts of dimethylaminoethanol and 21 parts of ammonium bisulfite (45%). The mixture is heated to 65°C under a nitrogen blanket. A premix of 657 parts of styrene, 657 parts of butyl acrylate and 8.73 parts of t-butyl hydroperoxide (90%) is added over 2 hours at 65°C and the mixture then held for an additional 1/2 hour. An additional 0.90 parts of t-butyl hydroperoxide (70%) is added. After 5 minutes a mixture of 1.8 parts ammonium bisulfite and 27 parts of water is added. Temperature (65°C) is held for an additional 1/2 hr. The resulting emulsion product has a solids content of 25.5%, a pH of 7.1, an acid number of 51.0 and viscosity (Brookfield) of 1140 centipoise (1.14 Pa · s).

Test results on aluminum and tin plate panels, as in Example 2, all produced excellent results.

Example 5

The emulsion product of Example 4 (4000 parts) is mixed with 222 parts of butanol, 882 parts of water and 9.43 parts of dimethylaminoethanol until uniform. The resulting finish, which is ready for spray liner application, has a solids content of 19.9%, a pH of 7.4, surface tension of 26.2 dynes/cm (26.2 mN/m) and viscosity of 36 sec as measured by #4 Ford Cup.

Test results on spray application using aluminum and tinplate cans produced blister-free interior can coatings with excellent enamel rater coverage. The sprayed coatings also showed excellent adhesion, reverse impact resistance and pasteurization resistance.

Examples 6—14

A series of compositions were prepared in the manner described in Example 4. The amount of dimethylaminoethanol present during reaction of the epoxy resin and the carboxyl containing acrylic copolymer was varied in increments from 10 percent to 35 percent of the amount necessary to neutralize the carboxyl groups of the acrylic copolymer. Results of reduced specific viscosity, viscosity and particle size were measured at various stages of the process. The results are summarized in Tables I and II. It is evident that the amount of amine present during the reaction between epoxy resin and the carboxyl group containing acrylic copolymer has a profound effect on the viscosity and particle size of the ionic polymer and that this effect is also evident after the styrene-butyl acrylate polymer is introduced.

TABLE I

| | Ionic resin solution | | | | Ionic resin dispersion | | | | |
|---|---|---|---|---|---|---|---|---|---|
| Ex | DMEOA | % NV | AN | RSV** | % NV | pH | Visc. (Pa · s) | % Neut | Part. size (µm) |
| 6 | 10 | 57.5 | 90.8 | 0.39 | 29.2 | 6.8 | 33.75 | 38.3 | 0.23 |
| 7 | 12 | 57.8 | 90.1 | 0.36 | 29.2 | 6.8 | 20.75 | 37.1 | 0.21 |
| 8 | 14 | 58.7 | 88.8 | 0.33 | 29.3 | 6.8 | 10.46 | 37.3 | 0.18 |
| 9 | 16 | 58.3 | 89.0 | 0.32 | 29.2 | 6.6 | 9.34 | 38.4 | 0.17 |
| 10 | 18 | 56.8 | 89.4 | 0.31 | 29.3 | 6.8 | 5.80 | 38.3 | 0.17 |
| 11 | 20 | 57.3 | 89.4 | 0.29 | 29.0 | 6.8 | 3.20 | 38.5 | 0.16 |
| 12 | 25 | 58.5 | 90.4 | 0.26 | 29.8 | 6.7 | 0.59 | 37.1 | 0.24 |
| 13 | 30 | 57.3 | 88.4 | 0.25 | 29.4 | 6.7 | 0.366 | 40.3 | 0.27 |
| 14 | 35 | 58.6 | 87.0 | 0.25 | 29.5 | 6.8 | 0.28 | 41.1 | 0.39 |

\* Percent neutralization of acrylic prepolymer
\*\* Reduced specific viscosity—1% by weight of dry resin in dimethylformamide at 25°C.

TABLE II

| | Ionic resin dispersion | | | | Dispersion of ionic resin and copolymer (24.8±.2% solids) | | |
|---|---|---|---|---|---|---|---|
| Example | % Cat.* DMEOA | RSV** | Visc. (Pa · s) | Part. size (µm) | RSV*** | Visc. (Pa · s) | Part. size (µm) |
| 6 | 10 | 0.39 | 33.75 | 0.23 | 0.81 | 1.41 | 0.25 |
| 7 | 12 | 0.36 | 20.75 | 0.21 | 0.63 | 0.63 | 0.30 |
| 8 | 14 | 0.33 | 10.46 | 0.18 | 0.70 | 0.50 | 0.28 |
| 9 | 16 | 0.32 | 9.34 | 0.17 | 0.65 | 0.275 | 0.27 |
| 10 | 18 | 0.31 | 5.80 | 0.17 | 0.68 | 0.20 | 0.27 |
| 11 | 20 | 0.29 | 3.20 | 0.16 | 0.80 | 0.11 | 0.27 |
| 12 | 25 | 0.26 | 0.59 | 0.24 | 0.79 | 0.031 | 0.31 |
| 13 | 30 | 0.25 | 0.366 | 0.27 | 0.60 | 0.021 | 0.39 |
| 14 | 35 | 0.25 | 0.28 | 0.39 | 0.61 | 0.016 | 0.57 |

\* Percent neutralization of acrylic polymer
\*\* Reduced specific viscosity—1% by weight of dry resin in dimethylformamide at 25°C
\*\*\* Reduced specific viscosity—1% by weight of dry resin in tetrahydrofuran at 25°C

Example 15
A. Preparation of epoxy-acrylate dispersant
A 12 l reactor equipped with stirrer, reflux condenser, thermometer, heating mantle and nitrogen blanket was charged with 3800.7 parts butanol. A premix of 1652.4 parts glacial methacrylic acid, 824.4 parts styrene, 275.4 parts ethyl acrylate and 197.1 parts benzoyl peroxide (70% water wet) was also prepared. Twenty percent of the premix was added to the reactor which was heated to 93°C under nitrogen and held at temperature for 15 minutes. The remaining premix was added over 5 hours at 93°C after which this temperature was held for 2 hours. Butanol (2250.0 parts) was added to give an acrylic prepolymer solution at 33.5% NV, acid number of 392 and viscosity of 9660 centipoise (9.66 Pa · s).

In a five liter reactor equipped as above were charged 65.5 parts of 2-butoxyethanol, 655.9 parts Epon 828, 364.5 parts bisphenol A and 2.1 parts tri-n-butylamine. The charge was heated to 136°C and allowed to exotherm to 175°C, then held at 150°C for 1.5 hours. The upgraded epoxy was defunctionalized 33% by addition of 27.0 parts stearic acid to an epoxy value of 0.21 meq/g oxirane. 2-Butoxyethanol 164.0 parts, 100 parts butanol and 551.2 parts of the above acrylic containing 29.6 parts of a 25% aqueous solution of trimethylamine esterification catalyst were added. A cloudy, opaque mixture was formed which was held at reflux (109°C) for constant acid number. At the end of 2.5 hours, the mixture had cleared completely and reached the acid number, 46.7, calculated for complete oxirane esterification. 2-Hexoxyethanol 18.0 parts, dimethylaminoethanol, 54.4 parts and Cymel 1156, 61.5 parts were added and stirred until uniform. Deionized water (2242 parts) was added to form a dispersion. After transfer to a 6 l container, 33 parts butanol and 17 parts 2-butoxyethanol were added and a finish was prepared at 19.5% NV by addition of deionized water.

B. Preparation of styrene/butyl acrylate modified epoxy-acrylate

Twenty-three hundred parts of the above dispersion was transferred to a 5 l reactor equipped as before. A premix of 76.9 parts styrene, 76.9 parts butyl acrylate and 0.02 parts t-butyl hydroperoxide (90%) was prepared and emulsified in the reactor under a nitrogen blanket where it was heated to 65°C. A premix of 1.5 parts of ammonium bisulfite in 15 parts water was added and 70°C was held for 3.0 hours. To remove any butyl acrylate residue, a premix of 38.4 parts styrene and 0.13 parts of t-butylhydroperoxide (90%) was then added followed in five minutes by a premix of 0.5 parts ammonium bisulfite in 5 parts water. The styrene overpolymerization was complete after holding at 70°C for 2 hours. A spray finish at 20% NV was prepared by the addition of deionized water. The finish gave excellent properties for the coating of can interiors including resistance to fracturing on a 40°F can drop test which is not passed by epoxy acrylates modified with 30% styrene add-on. The dispersion had a pleasant odor not objectionable for use as a commercial can coating.

**Claims**

1. An aqueous coating composition comprising
A. an ionic polymer component containing sufficient carboxyl groups to render it self-dispersible in water in neutralized form which is the reaction product of an epoxy resin containing 1,2-epoxy groups, and a preformed addition polymer containing carboxyl groups, said ionic polymer containing hydroxy ester groups from the reaction of 1,2-epoxy groups on said epoxy resin with carboxyl groups on said addition polymer, and being substantially free of unreacted 1,2-epoxy groups;
B. an addition polymer different from said addition polymer defined in (A) and;
C. ammonia or an organic amine neutralizing agent in an amount sufficient to render the composition stably dispersible in water.

2. The composition of claim 1 in which said addition polymer containing carboxyl groups is a polymer of methacrylic acid.

3. The composition of claim 1 or 2 in which the neutralizing agent is dimethylaminoethanol.

4. The composition of claim 1, 2 or 3 in which said 1,2-epoxy resin is an epichlorohydrin-bisphenol A epoxy resin.

5. The composition of any preceding claim in which said addition polymer (B) is present in a weight ratio, with respect to the ionic polymer component, of from 0.05:1 to 10:1.

6. The composition of any preceding claim in which said addition polymer (B) is formed of monomers free of functional groups reactive with said epoxy resin.

7. The composition of any preceding claim in which said addition polymer (B) is a copolymer of styrene and butyl acrylate.

8. The composition of any preceding claim in which said ionic polymer component (A) is the reaction product of epichlorohydrin-bisphenol A epoxy resin, an addition copolymer of methacrylic acid, ethyl acrylate and styrene, and dimethylaminoethanol; said addition polymer (B) is the copolymer of styrene and butyl acrylate; and the neutralizing agent (C) is dimethylaminoethanol in an additional amount than used to prepare (A).

9. A method for preparing a coating composition comprising the steps of
A. preparing an ionic polymer component containing sufficient carboxyl groups to render it self dispersible in water in neutralized form by reacting an epoxy resin containing 1,2-epoxy groups, and a preformed addition polymer containing carboxyl groups, said ionic polymer containing hydroxy ester groups from the reaction of 1,2-epoxy groups on said epoxy resin with carboxyl groups on said preformed addition polymer, and being substantially free of unreacted 1,2-epoxy groups;
B. dispersing said ionic polymer component in water with the addition of ammonia or an organic amine neutralizing agent in an amount sufficient to render the composition stably dispersible in water; and
C. incorporating an addition polymer different from said addition polymer defined in (A) into the aqueous dispersion of said ionic polymer component.

10. The method of claim 9 in which the different addition polymer of step (C) is formed, *in situ*, by polymerization in the presence of the aqueous dispersion of said ionic polymer component.

11. The method of claim 9 or claim 10 in which said ionic polymer component is prepared in the presence of a tertiary amine in an amount sufficient to react with 10 to 35 percent of the carboxyl groups on said addition polymer containing carboxyl groups. .

12. A method as claimed in claim 9 in which said different addition polymer is formed by addition polymerization of a first monomer such that a residue of the first monomer remains and the method includes the further step of reducing the amount of the residue of said first monomer by conducting a further polymerization step in the presence of said different addition polymer containing residual first monomer, with a second monomer which is capable of copolymerizing with said first monomer and which results in a less undesirable monomer residue or a residue which is more easily removable than said first monomer.

13. A method for preparing a coating composition comprising the steps of

A. preparing an ionic polymer component containing sufficient carboxyl groups to render it self-dispersible in water in neutralized form, by reacting an epoxy resin containing 1,2-epoxy groups with a preformed addition polymer containing carboxyl groups, said ionic polymer containing hydroxy ester groups from the esterification reaction of 1,2-epoxy groups on the epoxy resin with carboxyl groups on the preformed addition polymer and being substantially free of unreacted 1,2-epoxy groups;

B. dispersing the ionic polymer component in water with the addition of ammonia or an organic amine neutralizing agent in an amount sufficient to render the composition stably dispersible in water; and

C. incorporating unsaturated monomers in the resulting dispersion and polymerizing said monomers *in situ* to provide an addition polymer different from the carboxyl-containing addition polymer.

14. The method of claim 13 in which the unsaturated monomers referred to in Step C are free of functional groups reactive with epoxy resin.

15. The method of claim 13 or claim 14 in which the polymerization carried out in Step C provides a monomeric residue, the method including a further step of reducing the amount of residue by conducting a further polymerization in the presence of said different addition polymer with a second monomer which is capable of copolymerizing with said monomeric residue and which results in a less undesirable monomer residue or a residue which is more easily removable than said monomeric residue.

**Patentansprüche**

1. Wässriges Überzugsmittel, welches umfaßt:

A) eine ionische Polymerkomponente, die ausreichend Carboxylgruppen enthält, damit sie in neutralisierter Form in Wasser selbsttätig dispergierbar wird, die das Reaktionsprodukt eines Epoxyharzes, das 1,2-Epoxygruppen enthält, und eines Carboxylgruppen enthaltenden vorgeformten Additionspolymers ist, wobei das ionische Polymer Hydroxyestergruppen aus der Reaktion der 1,2-Epoxygruppen auf dem Epoxyharz mit den Carboxylgruppen auf dem Additionspolymer enthält und im wesentlichen frei von unreagierten 1,2-Epoxygruppen ist,

B) ein Additionspolymer, das von dem in (A) definierten Additionspolymer verschieden ist, und

C) ein Neutralisierungsmittel in Form von Ammoniak oder einem organischen Amin in einer ausreichenden Menge, damit die Zusammensetzung in Wasser dauerhaft dispergierbar wird.

2. Mittel nach Anspruch 1, worin das die Carboxylgruppen enthaltende Additionspolymer ein Polymer von Methacrylsäure ist.

3. Mittel nach Anspruch 1 oder 2, worin das Neutralisierungsmittel Dimethylaminoethanol ist.

4. Mittel nach Anspruch 1, 2 oder 3, worin das 1,2-Epoxyharz Epichlorhydrin-Bisphenol A-Epoxyharz ist.

5. Mittel nach einem der vorstehenden Ansprüche, worin das Additionspolymer (B) bezogen auf die ionische Polymerkomponente in einem Gewichtsverhältnis von 0,05:1 bis 10:1 vorhanden ist.

6. Mittel nach einem der vorstehenden Ansprüche, worin das Additionspolymer (B) aus Monomeren gebildet wird, die frei von funktionellen Gruppen sind, die mit dem Epoxyharz reagieren können.

7. Mittel nach einem der vorstehenden Ansprüche, worin das Additionspolymer (B) ein Copolymer von Styrol und Butylacrylat ist.

8. Mittel nach einem der vorstehenden Ansprüche, worin die ionische Polymerkomponente (A) das Reaktionsprodukt von Epichlorhydrin-Bisphenol A-Epoxyharz, einem Additionscopolymer von Methacrylsäure, Ethylacrylat und Styrol und Dimethylaminoethanol ist, das Additionspolymer (B) das Copolymer von Styrol und Butylacrylat ist, und das Neutralisierungsmittel (C) Dimethylaminoethanol in einer Menge ist, die zusätzlich zu der bei der Herstellung von (A) verwendeten Menge ist.

9. Verfahren zur Herstellung eines Überzugsmittels, welches die Schritte umfaßt:

A) Herstellung einer ionischen Polymerkomponente, die ausreichend Carboxylgruppen enthält, damit sie in neutralisierter Form in Wasser selbsttätig dispergierbar ist, durch Reaktion eines Epoxyharzes, das 1,2-Epoxygruppen enthält, und eines vorgeformten Additionspolymers, das Carboxylgruppen enthält, wobei das ionische Polymer Hydroxyestergruppen aus der Reaktion der 1,2-Epoxygruppen auf dem Epoxyharz mit Carboxylgruppen auf dem vorgeformten Additionspolymer enthält, und im wesentlichen

EP 0 116 225 B1

frei von unreagierten 1,2-Epoxygruppen ist,

B) Dispersion der ionischen Polymerkomponente in Wasser unter Zugabe eines Neutralisierungsmittels in Form von Ammoniak oder einem organischen Amin in einer ausreichenden Menge, damit die Zusammensetzung dauerhaft in Wasser dispergierbar ist, und

C) Einarbeitung eines Additionspolymers, das von dem in (A) definierten Additionspolymer verschieden ist, in die wässrige Dispersion der ionischen Polymerkomponente.

10. Verfahren nach Anspruch 9, worin das unterschiedliche Additionspolymer vom Schritt (C) an Ort und Stelle durch Polymerisation in Gegenwart der wässrigen Dispersion der ionischen Polymerkomponente gebildet wird.

11. Verfahren nach Anspruch 9 oder Anspruch 10, worin die ionische Polymerkomponente in Gegenwart einer ausreichenden Menge eines tertiären Amins hergestellt wird, damit eine Reaktion mit 10 bis 35% der Carboxylgruppen auf dem Carboxylgruppen enthaltenden Additionspolymer erfolgt.

12. Verfahren nach Anspruch 9, worin das unterschiedliche Additionspolymer durch Additionspolymerisation des ersten Monomers gebildet wird, so daß ein Rest des ersten Monomers bleibt, und dieses Verfahren den weiteren Schritt der Reduzierung der Restmenge des ersten Monomers umfaßt, indem ein weiterer Polymerisationsschritt in Gegenwart des unterschiedlichen Additionspolymers, das das restliche erste Monomer enthält, mit einem zweiten Monomer durchgeführt wird, das zur Copolymerisation mit dem ersten Monomer in der Lage ist, und das in einem weniger unerwünschten Monomerrest oder einem Rest resultiert, der leichter entfernbar ist, als das erste Monomer.

13. Verfahren zur Herstellung eines Überzugsmittels, welches die Schritte umfaßt:

A) Herstellung einer ionischen Polymerkomponente, die ausreichend Carboxylgruppen enthält, damit sie in neutralisierter Form in Wasser selbsttätig dispergierbar ist, durch Reaktion eines Epoxyharzes, das 1,2-Epoxygruppen enthält, mit einem vorgeformten Additionspolymer, das Carboxylgruppen enthält, wobei das ionische Polymer Hydroxyestergruppen aus der Veresterungsreaktion der 1,2-Epoxygruppen auf dem Epoxyharz mit den Carboxylgruppen auf dem vorgeformten Additionspolymer enthält, und im wesentlichen frei von unreagierten 1,2-Epoxygruppen ist,

B) Dispersion der ionischen Polymerkomponente in Wasser unter Zusatz eines Neutralisierungsmittels in Form von Ammoniak oder einem organischen Amin in einer ausreichenden Menge, damit diese Zusammensetzung in Wasser dauerhaft dispergierbar ist, und

C) Einarbeitung ungesättigter Monomere in die resultierende Dispersion und Polymerisation der Monomere an Ort und Stelle, um ein Additionspolymer zu schaffen, das von dem Carboxylgruppen enthaltenden Additionspolymer verschieden ist.

14. Verfahren nach Anspruch 13, worin die im Schritt (C) genannten ungesättigten Monomere frei von funktionellen Gruppen sind, die mit dem Epoxyharz reagieren können.

15. Verfahren nach Anspruch 13 oder 14, worin die im Schritt (C) durchgeführte Polymerisation einen monomeren Rest liefert, das Verfahren den weiteren Schritt der Reduzierung der Restmenge einschließt, indem eine weitere Polymerisation in Gegenwart des unterschiedlichen Additionspolymers mit einem zweiten Monomer durchgeführt wird, das zur Copolymerisation mit dem monomeren Rest in der Lage ist und das in einem weniger unerwünschten Monomerrest oder einem Rest resultiert, der leichter entfernbar ist als der monomere Rest.

**Revendications**

1. Une composition de revêtement aqueuse comprenant:

A. un constituant polymère ionique contenant suffisamment de groupes carboxyles pour le rendre autodispersible dans l'eau, sous une forme neutralisée, et consistant en le produit de la réaction d'une résine époxy contenant des groupes 1,2-époxy et d'un polymère d'addition préformé contenant des groupes carboxyles, ce polymère ionique contenant des groupes hydroxy ester provenant de la réaction des groupes 1,2-époxy de ladite résine époxy avec des groupes carboxyles dudit polymère d'addition et étant essentiellement exempt de groupes 1,2-époxy n'ayant pas réagi;

B. Un polymère d'addition différent dudit polymère d'addition défini dans (A) et;

C. Un agent de neutralisation à base d'ammoniac ou d'une amine organique, en une quantité suffisante pour rendre la composition dispersible de façon stable dans l'eau.

2. La composition selon la revendication 1, dans laquelle ledit polymère d'addition contenant des groupes carboxyles est un polymère d'acide méthacrylique.

3. La composition selon la revendication 1 ou 2, dans laquelle l'agent de neutralisation est de diméthylaminoéthanol.

4. La composition selon la revendication 1, 2 ou 3, dans laquelle ladite résine 1,2-époxy est une résine épichlorohydrine-bisphénol A époxy.

5. La composition selon l'une quelconque des revendications précédentes, dans laquelle ledit polymère d'addition (B) est présent en rapport pondéral par rapport au constituant polymère ionique compris entre 0,05/1 et 10/1.

6. La composition selon une quelconque des revendications précédentes dans laquelle ledit polymère d'addition (B) est formé de monomères exempts de groupes fonctionnels susceptibles de réagir avec ladite résine époxy.

7. Le composition selon une quelconque des revendications précédentes, dans laquelle ledit polymère d'addition (B) est un copolymère de styrène et d'acrylate de butyle.

8. La composition selon une quelconque des revendications précédentes, dans laquelle ledit constituant polymère ionique (A) est le produit de la réaction d'une résine épichlorohydrine-bisphénol A époxy, d'un copolymère d'addition d'acide méthacrylique, d'acrylate d'éthyle et de styrène, et de diméthylaminoéthanol; le polymère d'addition (B) étant le copolymère de styrène et d'acrylate de butyle et l'agent de neutralisation (C) étant le diméthylaminoéthanol employé en une quantité supplémentaire à celle qui est utilisée pour préparer (A).

9. Un procédé de préparation d'une composition de revêtement comprenant les étapes de:

A. préparation d'un constituant polymère ionique contenant suffisamment de groupes carboxyles pour le rendre autodispersible dans l'eau, sous une forme neutralisée, par réaction d'une résine époxy contenant des groupes 1,2-époxy et un polymère d'addition préformé contenant des groupes carboxyles, ce polymère ionique contenant des groupes hydroxy ester résultant de la réaction de groupes 1,2-époxy avec ladite résine époxy avec des groupes carboxyles dudit polymère d'addition préformé, et étant substantiellement exempt de groupes 1,2-époxy n'ayant pas réagi;

B. la dispersion du constituant polymère ionique dans de l'eau avec addition d'un agent de neutralisation à base d'ammoniac ou d'une amine organique en une quantité suffisante pour rendre la composition dispersible de façon stable dans l'eau; et

C. l'incorporation d'un polymère d'addition différent dudit polymère d'addition défini en (A) dans la dispersion aqueuse dudit constituant polymère ionique.

10. Le procédé selon la revendication 9, dans laquelle le polymère d'addition différent de l'étape (C) est formé in-situ par polymérisation en présence d'une dispersion aqueuse dudit constituant polymère ionique.

11. Le procédé selon la revendication 9 ou la revendication 10, dans lequel ledit constituant polymère ionique est préparé en présence d'une amine tertiaire utilisée en une quantité suffisante pour réagir avec 10 à 35% des groupes carboxyles dudit polymère d'addition contenant des groupes carboxyles.

12. Un procédé ainsi que revendiqué dans la revendication 9, dans laquelle le polymère d'addition différent est formé par polymérisation par addition d'un premier monomère de sorte que reste un résidu du premier monomère, ce procédé incluant une étape supplémentaire de réduction de la quantité dudit résidu dudit premier monomère par mise en oeuvre d'une étape de polymérisation supplémentaire en présence dudit polymère d'addition différent contenant le premier monomère résiduel avec un second monomère qui est susceptible de copolymériser avec ledit premier monomère, et qui conduit à l'obtention d'un résidu monomère moins indésirable ou d'un résidu qui peut être plus aisément éliminé dudit premier monomère.

13. Un procédé de préparation d'une composition de revêtement comprenant les étapes de:

A. préparation d'un constituant polymère ionique contenant suffisamment de groupes carboxyles pour le rendre autodispersible dans l'eau, sous une forme neutralisée, par réaction d'une résine époxy contenant des groupes 1,2-époxy avec un polymère d'addition préformé contenant des groupes carboxyles, ce polymère ionique contenant des groupes hydroxy ester provenant de la réaction d'esterification des groupes 1,2-époxy de la résine époxy avec des groupes carboxyles du polymère d'addition préformé et étant substantiellement exempt de groupes 1,2-époxy n'ayant pas réagi;

B. la dispersion du constituant polymère ionique dans de l'eau avec addition d'un agent de neutralisation à base d'ammoniac ou d'une amine organique en une quantité suffisante pour rendre la composition dispersible à l'état stable dans l'eau; et

C. l'incorporation de monomères insaturés dans la dispersion résultante et la polymérisation desdits monomères in-situ pour former un polymère d'addition différent du polymère d'addition contenant le carboxyle.

14. Le procédé selon la revendication 13, dans lequel les monomères insaturés mentionnés dans l'étape (C) sont exempts de groupes fonctionnels réactifs vis-à-vis de la résine époxy.

15. Le procédé selon la revendication 13 ou la revendication 14, dans lequel la polymérisation mise en oeuvre dans l'étape (C) fournit un résidu monomère, cette méthode incluant une étape ultérieure de réduction de la quantité de résidu par mise en oeuvre d'une polymérisation supplémentaire en présence dudit polymère d'addition différent avec un second monomère qui est susceptible de copolymériser avec ledit résidu monomère qui conduit à l'obtention d'un résidu monomère moins indésirable ou d'un résidu qui est plus aisément éliminable dudit résidu monomère.